# EUROPEAN PATENT SPECIFICATION

(11) **EP 0 272 873 B1**
(45) Date of publication and mention of the grant of the patent: **24.02.1993**
(21) Application number: 87311056.3
(22) Date of filing: 15.12.1987
(51) Int. Cl.: G11B 7/085, G11B 7/09

(54) **Tracking servo systems for optical disc players**
Spurfolgesysteme für optische Plattenspieler
Systèmes asservis de suivi de piste pour lecteurs de disques optiques

(30) Priority: 15.12.1986 JP 296644/86
(43) Date of publication of application: 29.06.1988
(73) Proprietor: SONY CORPORATION, Tokyo 141 (JP)
(72) Inventor: Eguchi, Naoya, Shinagawa-ku Tokyo 141 (JP); Nishida, Norio, Shinagawa-ku Tokyo 141 (JP)
(74) Representative: Thomas, Christopher Hugo

(56) References cited:
- EP-A- 0 089 263
- AU-B- 530 869

## Description

This invention relates to tracking servo systems for optical disc players.

Optical discs for high density digital recording of audio signals and/or video signals have data pits which have been formed by an energy beam, such as a laser beam, and are designed only for reproduction and not for recording. To increase their utility, optical discs which allow both recording and reproduction of data are being developed, and such optical discs will be referred to herein as recordable optical discs.

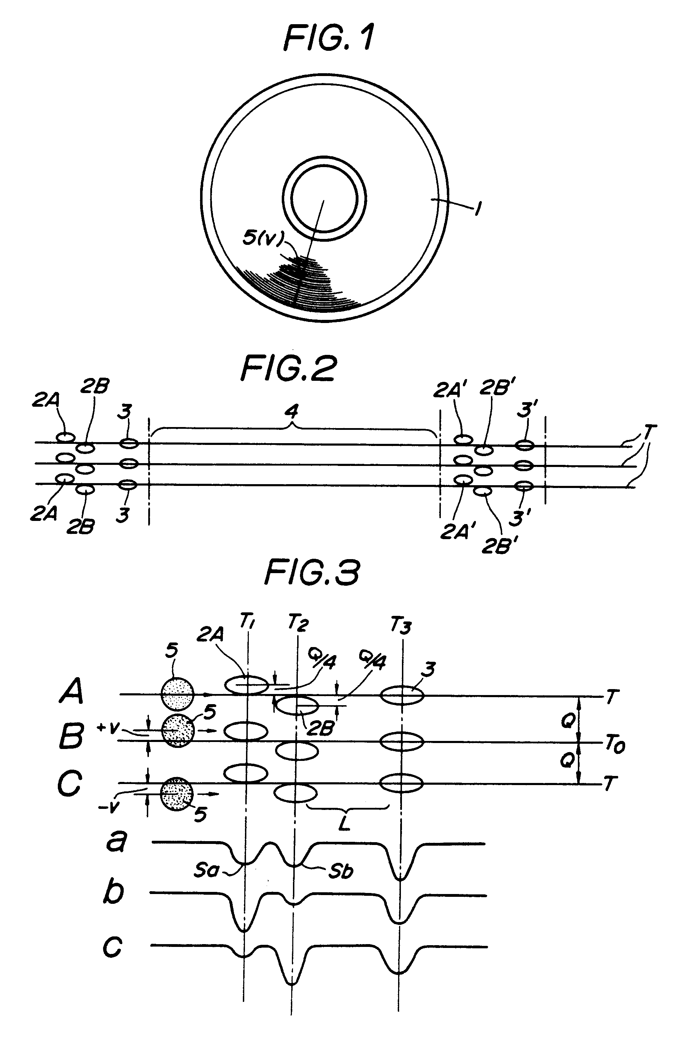

Figure 1 of the accompanying drawings is a plan view of a recordable optical disc 1 formed with a vertical magnetic layer which can be magnetized optomagnetically to form recording tracks as shown enlarged in Figure 2 of the accompanying drawings. In each of the tracks, servo areas for tracking are provided at regular intervals. Each servo area comprises three depressed pits 2A, 2B and 3 formed, for example, by embossing. The depth of each pit 2A, 2B and 3 substantially corresponds to 1/4 to 1/8 of the wavelength of a reading laser light. As clearly shown in the further enlarged view in Figure 3 of the accompanying drawings, pits 2A and 2B are respectively offset from the track centre by 1/4 of the distance Q between adjacent tracks. The pits 2A and 2B will be referred to as servo pits. On the other hand, the pit 3 is formed on the track centre, and is a predetermined distance L from the servo pit 2B. The signal reproduced from the pit 3 serves as a reference clock for the data, and will therefore be referred to as a clock pit. As seen from Figures 2 and 3, the servo pits 2A and 2B and the clock pits 3 on respective tracks are in radial alignment.

Between adjacent servo areas, a data recording area 4 is formed. For example, as shown in Figure 2, the data recording area 4 is formed between the servo area where the servo pits 2A and 2B and the clock pit 3 are formed, and the servo area where the servo pits 2Aʹ and 2Bʹ and the clock pit 3ʹ are formed.

Upon recording and reproduction of the data, a laser beam is irradiated onto the servo pits 2A and 2B and the clock pits 3 to reproduce tracking error signals and reference clock signals based on the reflected light beam. On the basis of the reflected light beam from a mirror portion L between the pits 2B and 3, a focus error signal is obtained.

The tracking error signal level varies depending upon the position of the laser beam spot 5 relative to the track as shown in Figure 3. When the irradiation point of the laser beam spot 5 moves in the direction shown by the arrow, the laser beam spot position tends to vary as shown at A, B and C in Figure 3, and the tracking error signal level tends to vary as shown at a, b and c in Figure 3 depending upon the relative position of the laser beam spot and the servo pits 2A and 2B.

In the case of A in Figure 3, the laser beam spot 5 is precisely on-track. Therefore, the tracking error signal level drops to substantially the same magnitude at the positions of the servo pits 2A and 2B due to the substantially similar reflected light intensity, as shown at a in Figure 3. On the other hand, in the case of B, since the laser beam spot 5 is offset from the track centre towards the side where the servo pit 2A is formed, the signal level drop at the position of the servo pit 2A is much greater than that at the servo pit 2B due to the difference in the irradiated pit areas, as shown at b in Figure 3. Similarly, in the case of C, since the laser beam spot 5 is offset from the track centre towards the side where the servo pit 2B is formed, the signal level drop at the position of the servo pit 2B is much greater than that at the servo pit 2A, as shown at c in Figure 3.

Therefore, by sampling the reflected light intensity Sa at the timing T1 where the laser beam irradiates the servo pit 2A, and the reflected light intensity Sb at the timing T2 where the laser beam irradiates the servo pit 2B, and by deriving the difference between the reflected light intensities at the timings T1 and T2, the offset magnitude of the laser beam spot 5 relative to the track centre can be obtained. The signal indicating the difference between Sa and Sb serves as the tracking error signal. In the tracking servo system, the laser beam spot position is controlled so as to reduce the indicated tracking error value (Sa - Sb) towards zero, so that the laser beam spot 5 can be located at the on-track position. Such tracking servo systems have been disclosed in US patent specifications US-A-4 553 228 (EP-A-0 089 263) and US-A 4 430 870.

A tracking servo system for an optical disc player also performs seek or track-access action for locating the laser beam spot on a desired one of a plurality of tracks by jumping tracks in the radial direction. Namely, in the seek mode, the laser beam spot position is shifted radially to be located on the desired track. This seek action is effected by driving a laser head in a radial direction by acceleration pulses and subsequent deceleration pulses. By the acceleration pulses, the laser head is driven in the radial direction towards the desired track. Subsequently, the deceleration pulses are generated to stop the laser head at the desired. However, due to the inertia of the laser head, it is difficult to stop the laser head at the required position, at which the laser beam spot is located at the on-track position. Therefore, subsequent to the seek action, it becomes necessary to adjust the laser beam spot position to be located at the on-track position. This action will be referred to herein as on-track adjustment. This necessarily prolongs the seek time.

Further details of the seek action and subsequent on-track adjustment will now be described.

Assuming that the radial position of the laser beam spot 5 is v, the pitch of the tracks in the radial direction is Q, and the laser beam spot 5 is located at the on-track position at the position v, the tracking error signal value et = Sa - Sb = 0. On the other hand, when the laser beam spot 5 is offset from the track centre, the tracking error signal value et is given by a sin coefficient:

$\text{et = -k sin (2πv/Q)}$

wherein k is a constant.

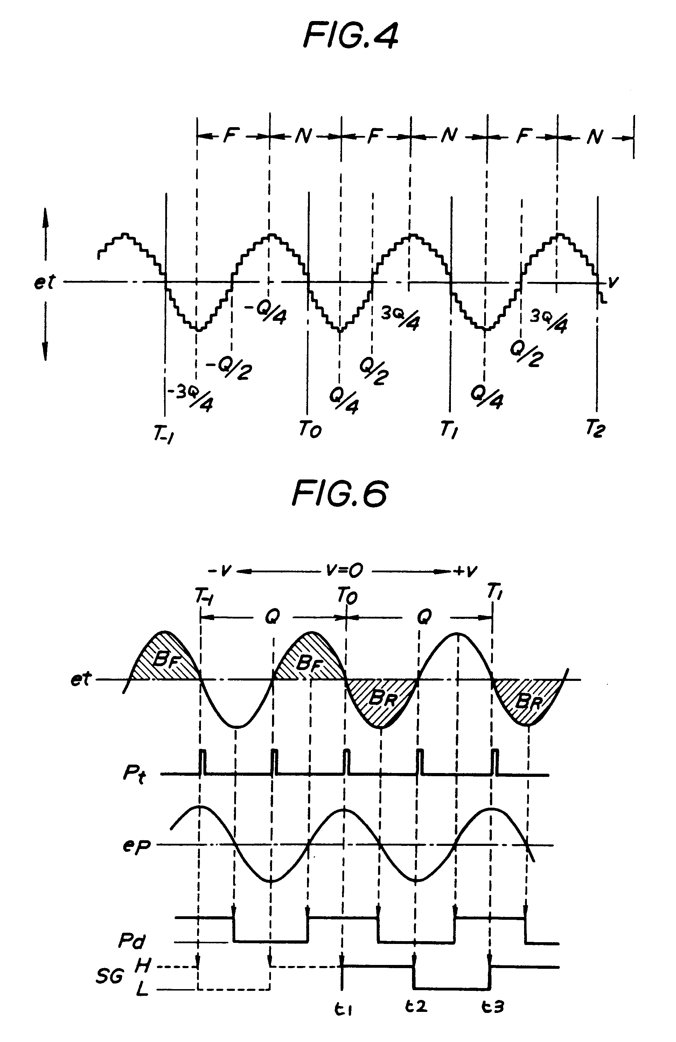

Depending on the laser beam spot position, the tracking error signal value varies substantially along a sin curve as shown in Figure 4 of the accompanying drawings, in step-wise fashion with a stepping magnitude of k.

During seek or traversing action, when the laser beam spot 5 is offset from the track centre by Q/2, the laser beam spot 5 irradiates the outer servo pit 2A of one track and the inner servo pit 2B of the next track. In this case, the irradiation area at the servo spots 2A and 2B is the same, and thus the tracking error signal value becomes zero.

Therefore, when the laser beam spot 5 is shifted radially for track-jump action, the tracking error signal level et in a range F of Figure 4 tends towards zero as the laser beam spot 5 approaches the track centre. On the other hand, while the laser beam spot 5 is in a range N, the tracking error signal level et increases as the laser beam spot 5 approaches the track centre. This necessarily prolongs the period necessary for on-track adjustment.

To solve this problem, Japanese patent second (examined) publication (Tokko) Showa 59/8893, discloses the use of a radio frequency (RF) signal to be reproduced during reproduction for on-track adjustment. the phase or level variation of the RF signal when the laser beam spot is off-set from the track centre is compared with the phase of the tracking error signal, for extracting a deceleration or braking signal.

This method is effective for shortening the on-track adjustment period, but only for playback-only optical discs, such as compact discs and video discs having the RF signal recorded. However, since a recordable optical disc has no recorded RF signal, this process is not applicable to a recordable optical disc.

According to the present invention there is provided a tracking servo system for an optical disc player for reproducing and/or recording data on a plurality of coaxially formed recording tracks on an optical disc which has a pair of servo pits and a clock pit on each of said recording tracks, said pair of servo pits being circumferentially spaced by a known distance and radially offset by a known distance in respective opposite directions from the track centre, the system comprising:
a laser beam generator means for irradiating a laser beam onto said disc for scanning the recording tracks;
a laser beam driving means for causing shift of the irradiating point of said laser beam in the radial direction;
a tracking servo circuit for controlling said laser beam driving means, said tracking servo circuit being operable for operating said laser beam driving means to cause radial shifting of said laser beam iradiating point and operable in feedback manner for adjusting said laser beam irradiating point relative to said track centre
a light receiving means for receiving the light beam reflected from the laser beam irradiating point and producing a light intensity indicating signal;
a first signal processing means for receiving said light intensity indicating signals respectively representative of the light intensity of the light beam reflected from respective servo pits for deriving a tracking error signal based on the light intensity indicating signal values; and
a second signal processing means for receiving said light intensity indicating signal representative of the light intensity of the light beam reflected from said clock pit, detecting the shift of the laser beam irradiating point in the radial direction, and producing a state indicating signal indicative of the shift of said laser beam irradiating point relative to said track centre;
characterized by:
third signal processing means for receiving said tracking error signal to detect zero-crossing of the tracking error signal value for producing a zero-crossing indicating signal, and deriving a servo control signal for enabling and disabling said feedback mode tracking servo control of said tracking servo circuit based on said state indicating signal and said zero-crossing indicating signal, whereby said feedback mode is enabled when a zero-crossing is indicated and said laser beam is within a predetermined radial distance of said track centre and disabled when a zero-crossing is indicated and said laser beam is not within said predetermined radial distance of said track centre.

Thus a tracking servo system in a recordable optical disc player apparatus according to the present invention utilizes clock signals to be produced by irradiating laser beam on clock pits in servo areas as a reference signal for on-track adjustment. Based on the clock signal, the polarity of a tracking error signal is detected for selectively opening and closing a servo loop of the tracking servo system.

CLOSED LOOP on-track adjustment will be performed while a laser beam spot is in a range where the tracking error indicating value is gradually reduced with decrease of the distance of the laser beam spot to the track centre. On the other hand, OPEN LOOP on-track adjustment will be performed while the laser beam spot is in a range where the tracking error indicating value is increased with decreasing distance between the laser beam spot and the track centre. Since the polarity of the tracking error signal indicates the range of the laser beam spot position, selection of the CLOSED LOOP and OPEN LOOP can be made without requiring the signal to be reproduced from the data area.

The invention will now be described by way of example with reference to the accompanying drawings, throughout which like parts are referred to by like references, and in which:
Figure 1 is a plan view of a recordable optical disc;
Figure 2 shows an enlarged portion of the disc;
Figure 3 is a further enlarged illustration of pits in servo area on the disc;
Figure 4 shows the waveform of a tracking error signal;
Figure 5 is a circuit diagram of an embodiment of tracking servo system, according to the present invention; and
Figure 6 shows waveforms of a tracking errors signal of a polarity indicating signal

Referring to Figure 5, an optical system 10 irradiates a laser beam P generated by a laser beam generator (not shown) onto the recording surface of an optical disc D which may be a recordable optical disc such as an optomagnetic disc, via a beam splitter B and an objective lens L1. The laser beam P is reflected and received by a light receiving element 11 via the beam splitter B and a convergence lens L2. The light receiving element 11 and the convergence lens L2 are arranged in alignment with each other along which the laser beam P is irradiated onto the disc D. Therefore, the reflected light beam passing the beam splitter B is deflected through about a right angle to be directed towards the light receiving element 11 which produces an electrical signal representative of the data indicated by the reflected light received, which signal is fed to first and second signal processing circuits 20 and 30.

The first signal processing circuit 20 has first and second sample/hold circuits 12A and 12B which are connected to a timing control circuit 60 which supplies timing control signals for controlling sample/hold timing. In order to control the sample timing, the timing control circuit 60 supplies a timing control signal at a timing T1 corresponding to the laser beam scanning timing of the servo pit 2A to trigger sampling and holding operation of the first sample hold circuit 12A. Similarly, the timing control circuit 60 supplies a timing control signal at a timing T2 corresponding to the laser beam scanning timing of the servo pit 2B, to trigger sampling and holding operation of the second sample/hold circuit 12B. Therefore, the first and second sample/hold circuits 12a and 12B become active for sampling the signal from the light receiving element 11 at the respective timings T1 and T2. Thus, the sample/hold circuits 12A and 12B sample the signals representative of the reflected light intensity at the servo pits 2A and 2B, and supply held value indicating output signals. The first signal processing circuit 20 includes a subtractor circuit 13 which receives the output signals of both the sample/hold circuits 12A and 12B, and comprises a differential amplifier connected to the sample/hold circuit 12A as its non-inverting input terminal and to the sample/hold circuit 12B at its inverting input terminal. The subtractor circuit 13 derives the difference between the output signals of the sample/hold circuits 12A and 12B to supply a difference indicating signal. The first signal processing circuit 20 further includes a third sample/hold circuit 14 connected to the timing control circuit 60 to receive therefrom a timing control signal at a timing T3 corresponding to the laser beam scanning timing of the clock pit 3. The third sample/hold circuit 14 samples and holds the difference indicating signal in response to the timing control signal at the timing T3. The sample/hold circuit 14 supplies the held difference indicating signal as a tracking error signal.

The second signal processing circuit 30 has a fourth sample/hold circuit 15 which is connected to the timing control circuit 60. The fourth sample/hold circuit 15 is also connected to the light receiving element 11 to receive the signal therefrom. Like the third sample/hold circuit 14, the fourth sample/hold circuit 15 is responsive to the timing control signal at the timing T3 to be triggered to sample and hold the signal from the light receiving element 11.

The fourth sample/hold circuit 15 is connected to a comparator circuit 16 which compares the held value indicating output of the sample/hold circuit 15 with zero level. The comparator 16 comprises a differential amplifier having a non-inverting input terminal connected to the fourth sample/hold circuit 15, and an inverting input terminal connected to earth.

The third sample/hold circuit 14 is connected to a tracking servo circuit 50 which comprises a low-pass filter 51, a phase compensation circuit 52, a switching circuit 53, a drive circuit 54 and a tracking coil 55. The tracking coil 55 is incorporated in an actuator for driving the objective lens L1 for tracking adjustment. The switching circuit 53 is also connected to a D flip-flop 18.

The third sample/hold circuit 14 is also connected to a zero-crossing detector circuit 17 which detects zero-crossing of the tracking error signal. The output of the zero-crossing detector circuit 17 is supplied to the flip-flop 18 which is further connected to the comparator circuit 16 to receive therefrom the comparator signal.

An RF signal generator 70 receives the output of the light receiving element 11 and reproduces an RF signal.

As set forth above, the outputs of the light receiving element 11 at the timings T1 and T2 correspond to the reduced reflected light intensity from the servo pits 2A and 2B. Similarly, the output of the light receiving element 11 at the timing T3 is reduced due to irradiation of the clock pit 3. As will be appreciated herefrom and from Figure 3 discussed above, the value et of the tracking error signal is variable depending upon the offset of the irradiating position v of the laser beam P. Namely, the value et of the tracking error signal is the difference between the output signal value Ea of the light receiving element 11 corresponding to the light intensity Sa reflected from the servo pit 2A and the output signal value Eb of the light receiving element 11 corresponding to the light intensity Sb reflected from the servo pit 2B. Therefore, the value et of the tracking error signal is:

$\text{et = Ea - Eb}$

During radial shifting of the laser beam irradiating point, such as during traversing or track-jump, the value et of the tracking error signal value varies with radial shifting as shown in Figure 4. Variation of the light receiver element output is shown in Figure 3 and is described above. Namely, assuming the laser beam irradiating point is v; the radial track pitch is Q; and the offset d of the servo pits 2A and 2B from the track centre is Q/4, and further assuming that the position v of the laser beam P is zero at the on-track position relative to the recording track TO, the light intensity reflected from the servo pit 2A becomes a minimum at the laser beam irradiating point v = d. Similarly, the light intensity reflected from the servo pit 2A becomes a minimum at the laser beam irradiating point v = -d. Therefore, the value et of the tracking error signal is:

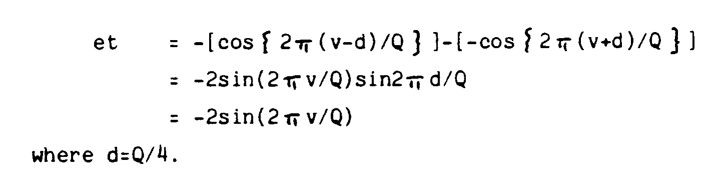

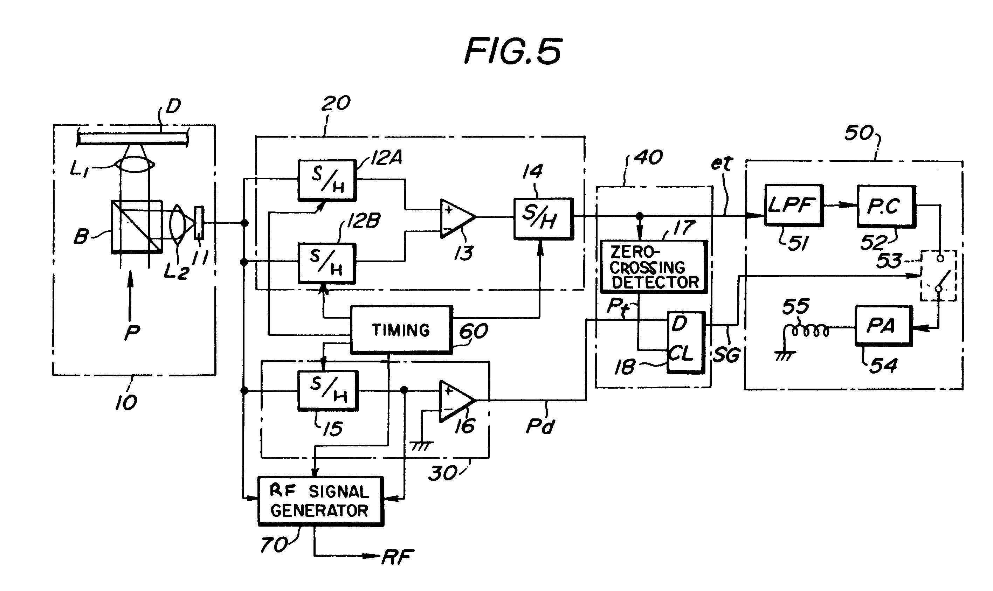

Therefore, the tracking error signal value et so derived is supplied from the third sample/hold circuit 14, and the waveform thereof is shown in Figure 6, the waveform being illustrated in analogue form for better understanding.

On the other hand, the sample/hold value ep in the fourth sample/hold circuit 15 becomes a minimum when the laser beam irradiation point is on-track, that is v = 0. When the laser beam irradiating point is intermediate between adjacent tracks, the sample/hold value EP of the fourth sample/hold circuit 15 becomes a maximum. In the on-track condition of the laser beam, the sample/hold value EP of the fourth sample/hold circuit 15 is:

$\text{EP = cos (2πv/Q) + C}$

where C is a bias value.

Extracting the AC component from the sample/hold value EP of the fourth sample/hold circuit 15 is illustrated in analogue waveform as shown in Figure 6. As will be appreciated the comparator signal is phase-shifted relative to the tracking error signal by π /2.

Since the sample/hold value EP is compared with the zero level at the comparator 16, the comparator signal value Pd varies between HIGH level and LOW level. Namely, the comparator signal Pd is held at HIGH level while the sample/hold value EP is above zero level, and is held at LOW level while the sample/hold value EP is below zero level.

The comparator signal Pd is supplied to the flip-flop 18 via its D-terminal, while the tracking error signal is supplied to the zero-crossing detector circuit 17. The zero-crossing detector circuit 17 detects the zero value of the tracking error signal to generate a trigger pulse Pt which is supplied to the flip-flop 18 to reverse the set/reset conditions thereof. Therefore, the output SG of the flip-flop, as shown in Figure 6, can be obtained.

As will be appreciated from Figure 6, the polarity of the output signal SG of the flip-flop 18 varies depending upon the relative shift direction between the laser beam irradiating point v and the recording tracks on the disc D. Namely, the output signal SG is held at HIGH level only in a period between the timings t1 and t2, in which the laser beam irradiating point v shifts across the track centre, when the laser beam irradiating point shifts in a direction +v. On the other hand, the output signal SG is held at LOW level during a period between the timings t2 and t3, in which the irradiating point v of the laser beam shifts across the intermediate point between the adjacent tracks, when the laser beam irradiating point shifts in a direction +v. On the other hand, when the irradiating point v of the laser beam shifts in a direction -v, the output signal SG is held at HIGH level only in a period between the timing t3 and t2, in which the laser beam irradiating point v shifts across the track centre, and is held at LOW level during a period between the timings t2 and t1, in which the irradiating point v of the laser beam shifts across the intermediate point between the adjacent tracks.

The output signal Sg of the flip-flop 18 is fed to the switching circuit 53 of the tracking servo circuit 50 to open and close it. The switching circuit 53 is responsive to the HIGH level output signal Sg of the flip-flop 18 to close, and is otherwise held open. Therefore, when the irradiating point of the laser beam shifts in the +v direction, the tracking error signal in a hatched range BR is applied to the tracking coil to perform CLOSED LOOP control to adjust the laser beam irradiating point at the track centre TO. On the other hand, when the irradiating point of the laser beam shifts in the -v direction, the tracking error signal in a hatched range BF is applied to the tracking coil to perform CLOSED LOOP control for decelerating radial shift of the laser beam irradiating point.

In this way, the period required for tracking adjustment after traversing action or track-jump action can be substantially shortened.

## Claims

1. A tracking servo system for an optical disc player for reproducing and/or recording data on a plurality of coaxially formed recording tracks on an optical disc (D) which has a pair of servo pits (2A, 2B) and a clock pit (3) on each of said recording tracks, said pair of servo pits (2A, 2B) being circumferentially spaced by a known distance and radially offset by a known distance in respective opposite directions from the track centre, the system comprising:
a laser beam generator means (10) for irradiating a laser beam (P)onto said disc (D) for scanning the recording tracks;
a laser beam driving means (55) for causing shift of the irradiating point of said laser beam (P) in the radial direction;
a tracking servo circuit (50) for controlling said laser beam driving means (55), said tracking servo circuit (50) being operable for operating said laser beam driving means (55) to cause radial shifting of said laser beam irradiating point and operable in feedback manner for adjusting said laser beam irradiating point relative to said track centre;
a light receiving means (11) for receiving the light beam reflected from the laser beam irradiating point and producing a light intensity indicating signal;
a first signal processing means (20) for receiving said light intensity indicating signals respectively representative of the light intensity of the light beam reflected from respective servo pits (2A, 2B) for deriving a tracking error signal based on the light intensity indicating signal values; and
a second signal processing means (30) for receiving said light intensity indicating signal representative of the light intensity of the light beam reflected from said clock pit (3), detecting the shift of the laser beam irradiating point in the radial direction, and producing a state indicating signal (P_{d}) indicative of the shift of said laser beam irradiating point relative to said track centre;
characterized by:
third signal processing means (40) for receiving said tracking error signal to detect zero-crossing of the tracking error signal value for producing a zero-crossing indicating signal (Pₜ), and deriving a servo control signal (SG) for enabling and disabling said feedback mode tracking servo control of said tracking servo circuit (50) based on said state indicating signal and said zero-crossing indicating signal, whereby said feedback mode is enabled when a zero-crossing is indicated and said laser beam is within a predetermined radial distance of said track centre and disabled when a Zero-crossing is indicated and said laser beam is not within said predetermined radial distance of said track centre.

2. A system according to claim 1 wherein said third signal processing means (40) includes a D flip-flop (18) having a D-terminal for receiving said state indicating signal (P_{d}) and a clear-terminal for receiving said zero-crossing indicating signal (Pₜ), and supplying said servo control signal (SG).

3. A system according to claim 1 wherein said tracking servo circuit (50) is operable in CLOSED LOOP mode and OPEN LOOP mode, for controlling said laser beam driving means (55), said tracking servo circuit means (50) being operable for operating said laser beam driving means (55) to cause radial shifting of said laser beam irradiating point and to adjust said laser beam irradiating point to said track centre in said CLOSED LOOP mode, and wherein said third signal processing means (40) selectively operates said tracking servo circuit means (50) in one of said CLOSED LOOP mode and said OPEN LOOP mode, based on said state indicating signal and said zero-crossing indicating signal.

4. A system according to claim 3 wherein said first signal processing means (20) includes first means (12A) for sampling said light intensity indicating signal at a first known timing at which said laser beam (P) is irradiated onto a first servo pit (2A) of said pair, a second means (12B) for sampling said light intensity indicating signal at a second known timing at which said laser beam (P) is irradiated onto a second servo pit (2B) of said pair, and third means (13, 14) for deriving a difference between said light intensity indicating signals sampled by said first and second means (12A, 12B) for deriving said tracking error signal.

5. A system according to claim 4 wherein said second signal processing means (30) includes fourth means (15) for sampling said light intensity indicating signal at a third known timing at which said laser beam is irradiated onto said clock pit (3) to produce said state indicating signal having a phase shift of known magnitude relative to said tracking error signal.

6. A system according to claim 5 wherein said phase shift is π/2.

## Patentansprüche

1. Spurfolgesystem für einen optischen Plattenspieler zur Datenwiedergabe und/oder -aufnahme auf einer Vielzahl von koaxial ausgebildeten Spuren auf einer optischen Platte (D), welche ein Paar von Servopits (2A, 2B) und ein Taktpit (3) auf jeder der genannten Aufnahmespuren aufweist, wobei das Paar von Servopits (2A, 2B) auf dem Umfang in einem bekannten Abstand voneinander angeordnet ist und radial um eine bekannte Distanz jeweils in entgegengesetzten Richtungen von der Spurmittellinie versetzt ist, wobei das System umfaßt:
einen Laserstrahlgenerator (10) zum Ausstrahlen eines Laserstrahls (P) auf die genannte Platte zum Abtasten der Aufnahmespuren,
Ansteuermittel (55) für den Laserstrahl zum Erzeugen einer Verschiebung des von dem genannten Laserstrahl (P) bestrahlten Punktes in radialer Richtung,
eine Spurfolgeschaltung (50) zum Steuern der genannten Ansteuermittel (55) für den Laserstrahl, wobei die genannte Spurfolgeschaltung geeignet ist, die genannten Ansteuermittel (55) für den Laserstrahl derart zu betreiben, eine radiale Verschiebung des von dem genannten Laserstrahl bestrahlten Punktes zu veranlassen, und weiterhin geeignet ist, in der Art einer Rückführung den durch den genannten Laserstrahl bestrahlten Punkt im Verhältnis zu der genannten Spurmittellinie einzurichten,
Lichtempfangsmittel (11) zum Empfang des von dem vom Laserstrahl bestrahlten Punkt reflektierten Lichtstrahls und zum Erzeugen eines die Lichtintensität anzeigendes Signal,
erste Mittel (20) zur Signalverarbeitung zum Empfang der genannten die Lichtintensität anzeigenden Signale, welche jeweils repräsentativ für die Lichtintensität des von den jeweiligen Servopits (2A, 2B) reflektierten Lichtstrahls sind, und zur Herleitung eines Spurfolgefehlersignals auf Grundlage der Werte der die Lichtintensität anzeigenden Signale, und
zweite Mittel (30) zur Signalverarbeitung zum Empfang des genannten die Lichtintensität anzeigenden Signals, welches jeweils repräsentativ für die Lichtintensität des von dem genannten Taktpit (3) reflektierten Lichtstrahls ist, zum Detektieren der Verschiebung des von dem Laserstrahl bestrahlten Punkts in radialer Richtung, und zum Erzeugen eines den Status anzeigenden Signals (Pd), welches die Verschiebung des genannten vom Laserstrahl beleuchteten Punktes in bezug auf die genannte Spurmittellinie anzeigt,
gekennzeichnet durch
dritte Mittel (40) zur Signalverarbeitung zum Empfang des genannten Spurfolgefehlersignals, um den Nulldurchgang des Wertes des Spurfolgefehlersignals zur Erzeugung eines einen Nulldurchgang anzeigenden Signals (Pt) festzustellen, und zum Herleiten eines Servosteuersignals (SG) zum Freigeben und Sperren der genannten im Rückkopplungsmodus arbeitenden Spurfolgesteuerung der genannten Spurfolgeschaltung (50) auf Grundlage des genannten den Status anzeigenden Signals und des genannten den Nulldurchgang anzeigenden Signals, wobei der genannte Rüchkopplungsmodus freigegeben wird, wenn ein Nulldurchgang angezeigt wird und der genannte Laserstrahl sich innerhalb eines vorgegebenen radialen Abstands von der genannten Spurmittellinie befindet, und gesperrt wird, wenn ein Nulldurchgang angezeigt wird und der Laserstrahl sich nicht innerhalb des genannten vorgegebenen radialen Abstands von der genannten Spurmittellinie befindet.

2. System nach Anspruch 1, bei dem die genannten dritten Mittel (40) zur Signalverarbeitung ein D-Flipflop enthalten, das einen D-Eingangsanschluß zum Empfang des genannten den Status anzeigenden Signals (Pd) und einen Lösch-Eingangsanschluß zum Empfang des genannten einen Nulldurchgang anzeigenden Signals (Pt) besitzt, sowie einen Ausgangsanschluß zur Abgabe des genannten Servosteuersignals (SG).

3. System nach Anspruch 1, in welchem die genannte Spurfolgeschaltung (50) zum Steuern der genannte Ansteuerungsmittel (55) für den Laserstrahl im Modus "Geschlossener Regelkreis" und im Modus "Offener Regelkreis" betrieben werden kann, wobei die genannten Spurfolgeschaltungen (50) geeignet ist, die genannten Ansteurermittel (55) für den Laserstrahl derart zu betreiben, um eine radiale Verschiebung des genannten von dem Laserstrahl bestrahlten Punktes zu bewirken und um den genannten von dem Laserstrahl bestrahlten Punkt bezüglich der genannten Spurmittellinie in dem genannten Modus "Geschlossener Regelkreis" zu justieren, und in welchem die genannten dritten Mittel (40) zur Signalverarbeitung selektiv die genannten Spurfolgeschaltungen (50) im genannten Modus "Geschlossener Regelkreis" und im genannten Modus "Offener Regelkreis" auf Grundlage des genannten den Status anzeigenden Signals und des genannten einen Nulldurchgang anzeigenden Signals betreiben.

4. System nach Anspruch 3, in welchem die genannten ersten Mittel (20) zur Signalverarbeitung erste Mittel (12A) zum Abtasten des genannten die Lichtintensität anzeigenden Signals zu einem ersten bekannten Zeitpunkt, an welchem der genannte Laserstrahl (P) auf ein erstes Servopit (2A) des genannten Paars ausgestrahlt wird, zweite Mittel (12B) zum Abtasten des genannten die Lichtintensität anzeigenden Signals zu einem zweiten bekannten Zeitpunkt, an welchem der genannte Laserstrahl (P) auf ein zweites Servopit (2B) des genannten Paars ausgestrahlt wird, und dritte Mittel (13, 14) zur Herleitung einer Differenz zwischen den genannten die Lichtintensität anzeigenden Signalen, die durch die genannten ertsten und zweiten Mittel (12A, 12B) abgetastet worden sind, zum Herleiten des genannten Spurfolge-Fehlersignals, enthalten.

5. System nach Anspruch 4, in welchem die genannten zweiten Mittel (30) zur Signalverarbeitung vierte Mittel (15) zum Abtasten des genannten die Lichtintensivität anzeigenden Signals zu einem dritten bekannten Zeitpunkt, an welchem der genannte Laserstrahl auf das genannte Taktpit (3) ausgestrahlt wird, enthalten, um das genannte den Status anzeigende Signal zu erzeugen, das eine Phasenverschiebung von bekannter Größe hinsichtlich des genannten Spurfolgefehlersignals aufweist.

6. System nach Anspruch 5, in welchem die genannte Phasenverschiebung π/2 beträgt.

## Revendications

1. Système d'asservissement de suivi de piste pour un lecteur de disque optique destiné à reproduire et/ou enregistrer des données sur une pluralité de pistes d'enregistrement formées de façon coaxiale sur un disque optique (D) qui comporte une paire de piqûres d'asservissement (2A, 2B) et une piqûre d'horloge (3) sur chacune desdites pistes d'enregistrement, les deux piqûres de ladite paire de piqûres d'asservissement (2A, 2B) étant espacées de façon circonférencielle d'une distance connue et décalées radialement d'une distance connue suivant des directions opposées par rapport au centre de piste, le système comprenant :
un moyen de générateur de faisceau laser (10) pour irradier un faisceau laser (P) sur ledit disque (D) pour balayer les pistes d'enregistrement ;
un moyen d'entraînement de faisceau laser (55) pour provoquer le décalage du point d'irradiation dudit faisceau laser (P) suivant la direction radiale ;
un circuit d'asservissement de suivi de piste (50) pour commander ledit moyen d'entraînement de faisceau laser (55), ledit circuit d'asservissement de suivi de piste (50) pouvant être actionné afin d'actionner ledit moyen d'entraînement de faisceau laser (55) pour provoquer un décalage radial dudit point d'irradiation de faisceau laser et pouvant être actionné en bouclage pour régler ledit point d'irradiation de faisceau laser par rapport audit centre de piste ;
un moyen de réception de lumière (11) pour recevoir le faisceau lumineux réfléchi depuis le point d'irradiation de faisceau laser et pour produire un signal indicateur d'intensité lumineuse ;
un premier moyen de traitement de signal (20) pour recevoir lesdits signaux indicateurs d'intensité lumineuse respectivement représentatifs de l'intensité lumineuse du faisceau lumineux réfléchi depuis des piqûres d'asservissement respectives (2A, 2B), pour dériver un signal d'erreur de suivi de piste sur la base des valeurs des signaux indicateurs d'intensité lumineuse ; et
un second moyen de traitement de signal (30) pour recevoir ledit signal indicateur d'intensité lumineuse représentatif de l'intensité lumineuse du faisceau lumineux réfléchi depuis ladite piqûre d'horloge (3), pour détecter le décalage du point d'irradiation de faisceau laser suivant la direction radiale et pour produire un signal d'indication d'état (P_{d}) qui indique le décalage dudit point d'irradiation de faisceau laser par rapport audit centre de piste ;
caractérisé par :
un troisième moyen de traitement de signal (40) pour recevoir ledit signal d'erreur de suivi de piste afin de détecter un passage à zéro de la valeur de signal d'erreur de suivi de piste pour produire un signal indicateur de passage à zéro (Pₜ), et pour dériver un signal de commande d'asservissement (SG) pour valider et invalider ladite commande d'asservissement de suivi de piste en mode bouclage dudit circuit d'asservissement de suivi de piste (50) sur la base dudit signal indicateur d'état et dudit signal indicateur de passage à zéro d'où il résulte que ledit mode bouclage est validé lorsqu'un passage à zéro est indiqué et lorsque ledit faisceau laser s'inscrit dans une distance radiale prédéterminée par rapport audit centre de piste et est invalidé lorsqu'un passage à zéro est indiqué et lorsque ledit faisceau laser ne s'inscrit pas dans ladite distance radiale prédéterminée par rapport audit centre de piste.

2. Système selon la revendication 1, dans lequel ledit troisième moyen de traitement de signal (40) inclut une bascule D (18) comportant une borne D pour recevoir ledit signal indicateur d'état (P_{d}) et une borne de remise à zéro pour recevoir ledit signal d'indication de passage à zéro (Pₜ), et pour appliquer ledit signal de commande d'asservissement (SG).

3. Système selon la revendication 1, dans lequel ledit circuit d'asservissement de suivi de piste (50) peut être actionné selon un mode en BOUCLE FERMEE et selon un mode en BOUCLE OUVERTE, pour commander ledit moyen d'entraînement de faisceau laser (55), ledit moyen de circuit d'asservissement de suivi de piste (50) pouvant être actionné pour actionner ledit moyen d'entraînement de faisceau laser (55) pour provoquer un décalage radial dudit point d'irradiation de faisceau laser et pour régler ledit point d'irradiation de faisceau laser sur ledit centre de piste dans ledit mode en BOUCLE FERMEE et dans lequel ledit troisième moyen de traitement de signal (40) actionne de façon sélective ledit moyen de circuit d'asservissement de suivi de piste (50) selon l'un desdits modes en BOUCLE FERMEE et en BOUCLE OUVERTE sur la base dudit signal indicateur d'état et dudit signal indicateur de passage à zéro.

4. Système selon la revendication 3, dans lequel ledit premier moyen de traitement de signal (20) inclut un premier moyen (12A) pour échantillonner ledit signal indicateur d'intensité lumineuse selon un premier cadencement connu selon lequel ledit faisceau laser (P) est irradié sur une première piqûre d'asservissement (2A) de ladite paire, un second moyen (12B) pour échantillonner ledit signal indicateur d'intensité lumineuse selon un second cadencement connu selon lequel ledit faisceau laser (P) est irradié sur une seconde piqûre d'asservissement (2B) de ladite paire et un troisième moyen (13, 14) pour dériver une différence entre lesdits signaux indicateurs d'intensité lumineuse échantillonnés par lesdits premier et second moyens (12A, 12B) pour dériver ledit signal d'erreur de suivi de piste.

5. Système selon la revendication 4, dans lequel ledit second moyen de traitement de signal (30) inclut un quatrième moyen (15) pour échantillonner ledit signal indicateur d'intensité lumineuse selon un troisième cadencement connu selon lequel ledit faisceau laser est irradié sur ladite piqûre d'horloge (3) afin de produire ledit signal indicateur d'état qui présente un déphasage d'une amplitude connue par rapport audit signal d'erreur de suivi de piste.

6. Système selon la revendication 5, dans lequel ledit déphasage vaut π/2.
